(19) Europäisches Patentamt
European Patent Office
Office européen des brevets

(11) Numéro de publication: **0 295 998 B1**

(12) **FASCICULE DE BREVET EUROPEEN**

(45) Date de publication de fascicule du brevet: **09.12.92**

(51) Int. Cl.[5]: **C01G 43/00**

(21) Numéro de dépôt: **88401321.0**

(22) Date de dépôt: **31.05.88**

# (54) Procédé de préparation de fluorure double d'uranium.

(30) Priorité: **01.06.87 FR 8707645**

(43) Date de publication de la demande:
**21.12.88 Bulletin 88/51**

(45) Mention de la délivrance du brevet:
**09.12.92 Bulletin 92/50**

(84) Etats contractants désignés:
**DE GB**

(56) Documents cités:
**FR-A- 1 265 152**
**LU-A- 42 162**
**US-A- 2 650 153**
**US-A- 2 880 059**

**CHEMICAL ABSTRACTS, vol. 84, no. 8, 23 février 1976, page 159, résumé no. 46783v, Columbus, Ohio, US; & JP-A-75 109 109**

**CHEMICAL ABSTRACTS, vol. 75, no. 10, 6 septembre 1971, page 270, résumé no. 67918x, Columbus, Ohio, US; A.E.P. BROWN et al.: "Catalytic reduction of aqueous solutions of uranyl nitrate"**

(73) Titulaire: **COMPAGNIE GENERALE DES MATIERES NUCLEAIRES (COGEMA)**
**2, rue Paul Dautier B.P. 4**
**F-78141 Vélizy-Villacoublay(FR)**

(72) Inventeur: **Petit, Jany**
**5 Allée des Boutons d'Or**
**F-78180 Montigny le Bretonneux(FR)**

(74) Mandataire: **Fort, Jacques**
**CABINET PLASSERAUD 84, rue d'Amsterdam**
**F-75009 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

EP 0 295 998 B1

## Description

L'invention a pour objet un procédé de préparation de fluorure double d'uranium et de métal alcalin ou alcalino-terreux (l'ammonium étant considéré comme un métal alcalin), à partir du nitrate d'uranyle, forme sous laquelle l'uranium neuf ou provenant du retraitement de combustible passe obligatoirement dans la pratique.

Ces fluorures doubles d'uranium présentent, dans l'industrie nucléaire, diverses applications. Le fluorure double d'uranium et d'ammonium est utilisé dans la fabrication industrielle du tétrafluorure d'uranium ($UF_4$) qui permet d'aboutir au métal uranium par métallothermie. Les fluorures doubles d'uranium trouvent également une application dans l'élaboration directe de l'uranium métal par métallothermie, notamment par calciothermie ou par électrolyse en sels fondus.

On connaît déjà des procédés de préparation de tels fluorures doubles d'$UF_4$ à partir du nitrate d'uranyle. La plupart utilisent le passage par un composé intermédiaire, l'oxyde d'uranium $UO_2$. On a cependant également proposé un procédé de préparation de fluorure double d'uranium $UF_4NaF$ à partir de nitrate d'uranyle $UO_2(NO_3)2$ par réduction de nitrate d'uranyle en nitrate uraneux en solution contenant un fluorure alcalin, par l'acide formique et l'anhydride sulfureux : ce procédé introduit des ions étrangers. On connaît également (brevet US 2 650 153 délivré le 25 août 1953) un procédé de préparation de fluorure double d'uranium et d'ammonium par précipitation de l'uranium d'un sel d'uranium IV en solution, par le fluorure d'ammonium en présence d'un sel d'ammonium. Le seul exemple donné consiste en la production de $NH_4UF_5$ à partir du diuranate d'ammonium, avec un rendement de 67,8 % seulement.

L'électrolyse est jusqu'ici la solution classique de production du nitrate uraneux à partir du nitrate d'uranyle : elle se prête à un contrôle précis par commande de la tension ou du courant. Mais l'électrolyse a des inconvénients : les électrolyseurs à diaphragme nécessaires occupent un grand volume. Le rendement est souvent inférieur à 90%, de sorte que de l'uranium resterait à la valence VI dans la solution soumise à l'étape de précipitation du fluorure double et que des volumes importants devraient être recyclés. Le milieu d'électrolyse est non confiné, d'où des risques de contamination. Le nettoyage des électrodes est difficile.

L'invention vise à écarter ces difficultés et notamment à préparer les fluorures doubles par un procédé où la réduction est effectuée sous un moindre volume, avec une moindre consommation d'énergie et avec un rendement proche de 100%.

On connaît de nombreux procédés de laboratoire autres que l'électrolyse permettant de réduire U(VI) en U(IV) en solution nitrique. En particulier, on savait dès 1971 réaliser la réduction catalytique d'une solution aqueuse de nitrate d'uranyle sur des volumes inférieurs au litre en employant l'hydrogène à basse pression en tant qu'agent réducteur (Chemical Abstracts, Vol. 92, No. 10, Mars 1980, p. 752, résumé N° 87290r). L'utilisation d'un tel mode de réduction dans un procédé de préparation d'$UF_4$ du genre ci-dessus défini a semblé jusqu'ici exclue pour diverses raisons suivantes. En particulier, on pouvait craindre la décomposition de l'acide nitrique suivant la réaction :

$$H^{+}.NO_3^{-} + 2H^{\bullet} \rightarrow HNO_2 + H_2O$$

Or, la présence d'une teneur appréciable de nitrite réduirait le taux de conversion apparent. Le sel obtenu par précipitation à l'acide fluorhydrique aurait tendance à se redissoudre par déplacement vers la droite de l'équilibre :

$$UF_4 \rightleftharpoons U^{4+} + 4F^{-}$$

du fait de la disparition de $U^{4+}$ suivant la réaction

$$U^{4+} + 2HNO_2 \rightarrow UO_2^{2+} + 2H^{+} + 2NO$$

qui est auto-catalytique.

On pouvait même craindre que cette réaction auto-catalytique ne soit pas maîtrisable par l'hydrazine du fait de la quantité de nitrite formée dans le réacteur.

L'ajout d'un stabilisateur tel que l'hydrazine ou l'urée, jugé jusqu'ici nécessaire aussi bien dans le cas d'une réduction électrolytique (DE-A-21 67 115) que dans le cas de la réduciton catalytique crée des difficultés lorsqu'on recycle des eaux mères provenant de la seconde étape, par exemple lorsque l'uranium traité est enrichi et rend nécessaire une récupération quasi quantitative.

On a également déjà proposé (LU-A-42162) un procédé de réduction de nitrate d'uranyle en nitrate uraneux, pouvant être utilisé comme agent réducteur du plutonium, par l'hydrogène en présence d'ions $H+$ et d'un catalyseur à base d'un métal du groupe du platine, à une pression qui peut être de 5 à 20 bars.

L'invention écarte les difficultés des procédés antérieurs en effectuant la réduction par voie catalytique par l'hydrogène en présence d'ions $H^{+}$ sous pression élevée (pratiquement entre 30 et 50 bars, avantageusement entre 40 et 50 bars). Ainsi, la solution nitrique présente au cours de la réduction une haute teneur en hydrogène dissous. Dans ces conditions, la durée nécessaire à la réduction catalytique (donc le temps de séjour dans le réacteur où s'effectue l'opération) est très brève, de

quelques minutes (par exemple environ 3 mn) et le risque de décomposition d'une fraction appréciable de l'acide nitrique disparaît. La présence d'hydrogène dissous dans la solution de nitrate uraneux provenant de la réduction catalytique évite la réoxydation de l'uranium de la valence IV à la valence VI et permet d'éviter l'adjonction d'un stabilisateur ou de limiter sa teneur à une valeur très faible.

En résumé, l'invention propose un procédé de préparation de fluorure double d'uranium et de métal alcalin ou alcalino-terreux à partir de nitrate d'uranyle, conforme à la revendication 1.

Pour que la réduction catalytique soit rapide dans le réacteur, il est souhaitable de maintenir la température dans le réacteur à une valeur supérieure à 20° C. Mais il faut éviter d'atteindre des températures pour lesquelles il y a décomposition appréciable de l'acide nitrique, ce qui impose de ne pas atteindre 50° C. Dans la pratique, il est souhaitable de ne pas dépasser 30° C. La solution nitrique introduite dans le réacteur a avantageusement une teneur élevée en nitrate d'uranyle, pouvant correspondre à une plage de 150 à 250g d'uranium métal par litre. La réaction étant exothermique, le réglage de température s'effectuera généralement par refroidissement par circulation de liquide.

Les fluorures doubles d'uranium étant insolubles, il suffit d'un faible excès d'ions fluorure, alcalins ou alcanio-terreux, pour provoquer une précipitation quasi complète dans la cuve de précipitat, sous forme d'une bouillie ayant une faible teneur en eaux mères. Le rendement de l'ensemble du processus dépasse souvent 99%, ce qui permet de se dispenser d'un recyclage complet. Les eaux mères récupérées lors de la filtration contiennent essentiellement de l'acide nitrique qui, moyennant un traitement simple, peut être purifié et concentré suffisamment pour que puisse être commercialisée la partie qui n'est pas nécessaire pour préparer la solution nitrique soumise à réduction catalytique.

L'invention sera mieux comprise à la lecture de la description qui suit d'un mode particulier de réalisation d'une installation et du procédé qu'elle met en oeuvre. La description se réfère à la Figure unique qui l'accompagne et montre schématiquement les composants principaux de l'installation.

L'installation montrée schématiquement sur la Figure est destinée à fournir du fluorure double d'uranium sec à partir de nitrate d'uranyle provenant par exemple d'une usine de concentration et de purification d'uranium naturel ou d'une usine de retraitement de combustible irradié.

Au cours d'une première opération, la concentration et l'acidité de la solution à traiter sont ajustées. Pour cela, le nitrate d'uranyle prélevé dans une cuve de stockage 10 est amené à une cuve de préparation 12 munie de moyens d'apport d'eau et d'acide nitrique.

La concentration de la solution est avantageusement amenée à une valeur comprise entre 150 et 250 g d'uranium par litre. La concentration en acide nitrique doit être suffisante pour fournir les ions H+ nécessaires à la réaction et elle dépendra donc de la concentration de la solution en uranium. Dans la pratique, l'acide nitrique doit être en excès par rapport à la quantité stoechiométriquement nécessaire, qui est de 2 moles d'acide nitrique par mole de nitrate d'uranyle à réduire. La concentration d'acide nitrique sera comprise entre 2N et 5N et obtenue par exemple par ajout d'acide nitrique 7N à 13N, pour les teneurs en $UO_2(NO_3)_2$ données plus haut. Cette concentration est choisie de façon à conserver une acidité supérieure à 0,5N en fin de réaction

La solution nitrique de nitrate d'uranyle provenant de la cuve 12 et de l'hydrolyse sont injectés sous pression au fond du réacteur 14 de réduction catalytique, au-dessous du lit catalytique 16. Le lit catalytique peut être de nature classique, par exemple à base de nickel, platine ou palladium sur un support ayant une bonne tenue mécanique et une résistance élevée à l'acide nitrique. Ce support pourra notamment être l'alumine ou la silice.

L'hydrogène introduit doit être en quantité surstoechiométrique par rapport à celle nécessaire à la réaction de réduction :

$$UO_2(NO_3)_2 + 2HNO_3 + H2 \rightarrow U(NO_3)_4 + 2H_2O$$

Dans la pratique, il suffira en général d'un excès d'hydrogène de l'ordre de 20%, bien qu'on puisse utiliser des teneurs très supérieures.

Les réactifs sont introduits sous pression élevée de façon augmenter la teneur d'hydrogène dissous dans le milieu nitrique ; on obtient ainsi un rendement élevé même pour des temps de séjour brefs. Dans la pratique, le rendement devient très satisfaisant dès une pression de 30 bars et on utilisera en général une pression comprise entre 40 et 50 bars. La température sera généralement maintenue entre 20° C (la cinétique de réaction se ralentissant considérablement au-dessous de cette valeur) et 30° C (de façon à être très loin du seuil de 50° C à partir duquel il y a décomposition rapide de $HNO_3$, d où réoxydation de l'uranium qui, présent dans l'eau de cristallisation, pourrait provoquer la formation ultérieure d'$UO_2F_2$, lors de la déshydratation).

La température est régulée par exemple à l'aide d'un serpentin 18 parcouru par un liquide réfrigérant, la réaction étant exothermique. Le temps de séjour peut être réduit à quelques minutes, par exemple 3 mn, ce qui limite à un taux négligeable la décomposition de l'acide nitrique aux températures ci-dessus.

La solution sous pression extraite à la partie haute du réacteur 14 est envoyée dans un pot de détente 20 qui fournit des effluents gazeux hydrogénés, envoyés à une unité de traitement en vue de la réutilisation éventuelle de l'hydrogène, et une solution dégazée qui est envoyée à une cuve 24 de précipitation, par l'intermédiaire d'un barboteur 22 traversé par un flux d'azote destiné à entraîner l'hydrogène résiduel.

La présence d'une teneur importante d'hydrogène dissous jusqu'à la détente dans le pot 20 permet d'éviter jusque là toute réoxydation. A partir du moment où l'hydrogène a été évacué et jusqu'à précipitation, il ne s'écoule qu'un délai court, de sorte que souvent il sera inutile d'ajouter un produit stabilisateur avant envoi à la cuve de précipitation 24. Cependant, on peut dans certains cas ajouter une faible teneur d'hydrazine à la solution qui quitte le barboteur 22.

La cuve de précipitation 24 est munie de moyens d'amenée de la solution provenant du barboteur qui ne contient pratiquement plus d'hydrogène et de moyens d'amenée des réactifs, constitués par de l'acide fluorhydrique. La précipitation s'effectue selon une réaction différente suivant la nature du fluorure double à préparer. Quelques exemples seront maintenant donnés, correspondant notamment à la préparation de fluorure double d'uranium et d'ammonium. Les autres fluorures doubles alcalins et alcalino-terreux sont également susceptibles d'applications nucléaires, notamment le fluorure double d'uranium et de sodium et le fluorure double d'uranium et de calcium (ou de magnésium).

1. Selon un premier mode de mise en oeuvre, les ions fluorure et les ions ammonium (ou alcalins, ou alcalino-terreux) sont introduits sous forme de fluorure d'ammonium (ou de fluorure alcalin ou alcalino-terreux) seul ou en association avec l'acide fluorhydrique HF.

Dans le cas où on introduit les ions fluorure et les ions ammonium sous forme de fluorure d'ammonium, la réaction de précipitation peut s'écrire :

$$U(NO_3)_4 + 5NH_4F \rightarrow UNH_4F_5 + 4NH_4NO_3$$

Dans le cas où on introduit les ions fluorure et les ions ammonium sous forme de fluorure d'ammonium et d'acide fluorhydrique, la réaction de précipitation peut s'écrire :

$$U(NO_3)_4 + NH_4F + 4HF \rightarrow UNH_4F_5 + 4NHO_3$$

Le procédé de l'invention est mis en oeuvre dans des conditions proches de la stoechiométrie vis-à-vis des ions ammonium (ou alcalins, ou alcalino-terreux). Mais s'il y a insuffisance d'ions ammonium, alcalins ou alcalino-terreux, il y a précipitation d'$UF_4$ et non de sel double pour cette raison les réactifs, c'est-à-dire les ions ammonium (ou alcalins, ou alcalino-terreux) et les ions fluorure, sont introduits en léger excès, d'environ 1 à environ 20%, de préférence environ 5 %, par rapport à la stoechiométrie, de façon à couvrir les fluctuations de la concentration et du débit en nitrate d'uranium (IV). De plus l'acide fluorhydrique apporté doit être en excès par rapport à la quantité stoechiométriquement nécessaire pour tenir compte de l'équilibre de dissociation $HF \rightleftharpoons H^+ + F^-$. L'excès nécessaire dépend du pH de la solution et du degré de complexation du fluor par les traces d'uranium (VI) résiduel, qui sera toujours en très faible quantité. Dans la pratique, l'excès d'acide fluorhydrique sera compris entre 1 et 20%, et sera habituellement d'environ 5% pour que la réaction de précipitation soit à coup sûr complète. Celle-ci est très rapide, du fait de la faible solubilité des fluorures doubles.

Le fluorure d'ammonium (ou alcalin, ou alcalino-terreux) est avantageusement utilisé à une concentration initiale d'environ 200 à environ 400 g/l, à un débit tel que l'on ait un excès d'ions ammonium, alcalins ou alcalino-terreux et un excès d'ions fluorure. De même, l'acide fluorhydrique est éventuellement introduit sous forme concentrée, par exemple à une concentration initiale de 50 à 70% en poids, de façon à obtenir un mélange final (précipitat et eaux mères) ayant une teneur très élevée en fluorure double.

2. Selon un autre mode de mise en oeuvre de l'invention, les ions fluorure et les ions ammonium (ou alcalins, ou alcalino-terreux) sont introduits sous forme de mélange d'ammoniaque $NH_4OH$ (ou d'une base dont le cation correspond à l'ion alcalin, ou alcalino-terreux) et d'acide de fluorohydrique.

Dans le cas où les ions ammonium et fluorure sont introduits sous forme d'ammoniaque et d'acide de fluorhydrique, la réaction de précipitation peut s'écrire :

$$U(NO_3)_4 + 5NH_4OH + 5HF \rightarrow UNH_4F_5 + 4NH_4NO_3 + 5H_2O$$

$NH_4OH$ est avantageusement utilisée à une concentration initiale d'environ 200 à environ 400 g/l et HF est avantageusement utilisé à une concentration initiale d'environ 50 à environ 70% en poids.

3. Selon un troisième mode de mise en oeuvre de l'invention, les ions fluorure et les ions ammonium (ou alcalins, ou alcalino-terreux) sont introduits sous forme d'un mélange de carbonate ou de nitrate d'ammonium (ou du cation correspondant à l'ion alcalin ou alcalino-terreux

souhaité) et d'acide fluorhydrique.

Dans le cas où on introduit les ions ammonium et fluorure sous forme de carbonate d'ammonium et d'acide fluorhydrique respectivement, la réaction de précipitation peut s'écrire :

$$U(NO_3)_4 + \frac{5}{2}\ (NH_4)_2CO_3 + 5HF \rightarrow UNH_4F_5 + \frac{5}{2}\ CO_2 + 4NH_4NO_3 + \frac{5}{2}\ H_2O$$

Le carbonate est avantageusement utilisé à une concentration initiale d'environ 50 à environ 100 g/l et HF est avantageusement utilisé à une concentration initiale d'environ 50 à environ 70 % en poids.

De la même façon que précédemment, les réactifs (ions ammonium, alcalins ou alcalino-terreux introduits sous forme de nitrate, surfate ou carbonate et HF) sont introduits en excès (de l'ordre d'environ 1 à 20 %, de préférence 5 %) par rapport à la stoechiométrie.

Le choix du carbonate, respectivement du nitrate, sera fonction des différents phénomènes de compétition pouvant exister entre les différents ions uranium, alcalins ou alcalino-terreux, présents dans la solution, ainsi qu'en fonction de leurs solubilités respectives.

Quel que soit le mode de mise en oeuvre retenu, la seconde étape du procédé selon l'invention a généralement lieu à la température ambiante et il convient pour des raisons de stabilité de ne pas travailler à une température supérieure à 50 ° C.

Un exemple chiffré de préparation de fluorure double d'uranium et d'ammonium à partir de nitrate d'uranyle sera maintenant donné.

(a) On a préparé tout d'abord, dans la cuve 12, une solution nitrique de nitrate d'uranyle à 150g/l d équivalent uranium, avec un rapport $HNO_3/U$ = 2,86.

La solution a été réduite en continu dans le réacteur sous pression 14 par un flux d'hydrogène circulant en co-courant en présence d'un catalyseur constitué par du platine sur support en alumine. La pression de travail était de 40 bars et la chaleur de réaction était évacuée par un système de refroidissement maintenant la température à 30 ° C. Le débit d'hydrogène introduit était en excès de 20% par rapport à la stoechiométrie pour pallier aux fluctuations de concentration et de débit.

Le catalyseur utilisé est du SPHEROSYL X04 400 disponible commercialement auprès de la société PROCATALYSE.

La capacité de réduction était de 12 kg/h, le temps de séjour étant d'environ 5 mn. Le rendement de la réduction a été supérieur à 99%.

(b) La solution de nitrate uraneux obtenue à la sortie du réacteur 14 a été dégazée dans un séparateur 20 à pression atmosphérique, l'hydrogène libéré étant recyclé.

(c) La solution de nitrate uraneux dégazée a été introduite, sans ajout de stabilisateur, dans une cuve de réaction 24 munie d'un agitateur (non représenté) contenant une solution de fluorure d'ammonium à 30 %. Un excès de $NH_4F$ de 5% par rapport à la stoechiométrie a été maintenu pour garantir la précipitation quasi totale de l'uranium IV.

Dans l'installation pilote, deux cuves 24 en cascade étaient prévues, ce qui favorise le grossissement des grains de fluorure double, augmente le temps de séjour et permet de se rapprocher des conditions de stoechiométrie pour HF en tenant compte de la constante de dissociation de HF et de la complexation de la très faible teneur (moins de 1%) en $UO_2^{++}$ non converti. Ce nombre de deux cuves en cascade n'est pas limitatif.

(d) Le mélange de précipité et d'eaux mères soutiré au fond des cuves de réaction 24 a été envoyé à un dispositif de filtration 26. Le précipité de $UNH_4F_5$ a été lavé par une solution d'HF puis d'eau, puis séché à une température finale comprise entre 120 ° C et 150 ° C, sous gaz inerte. Les eaux mères étaient envoyées vers un séparateur 28 permettant de récupérer des effluents liquides contenant essentiellement de l'acide nitrique, réutilisable après traitement, et des effluents gazeux.

Le rendement du procédé s'est révélé supérieur à 99%, rendant inutile le recyclage en cas de traitement d'uranium naturel. Les quantités à recycler dans le cas de préparation de fluorure double d'uranium enrichi restent faibles et ne compliquent pas notablement l'installation.

## Revendications

1. Procédé de préparation de fluorure double d'uranium et d'ammonium ou de métal alcalin ou alcalino-terreux, à partir de nitrate d'uranyle, suivant lequel on réduit le nitrate d'uranyle en nitrate uraneux, en solution aqueuse nitrique ; et on précipite l'uranium de la solution sous forme de fluorure double avec des ions fluorures, en présence d'ions, alcalin ou alcalino-terreux, caractérisé en ce qu'on effectue la réduction par l'hydrogène en continu par circulation sur un lit de catalyseur en présence d'ions $H+$ sous pression supérieure à 30 bars et à une température inférieure à 50 ° C avec un excès d'hydrogène par rapport à la quantité stoechiométriquement nécessaire, à une concentration d'acide nitrique comprise entre 2N et 5N.

2. Procédé selon la revendication 1, caractérisé en ce que la pression au cours de la réduction

est comprise entre 40 et 50 bars.

**3.** Procédé selon la revendication 1 ou 2, caractérisé en ce que la durée de la réduction est de l'ordre de cinq minutes.

**4.** Procédé selon la revendication 1, caractérisé en ce que le catalyseur est à base de platine, de palladium ou de nickel sur support en silice ou en alumine.

**5.** Procédé selon la revendication 4, caractérisé en ce que la réduction est effectuée à une température comprise entre 20°C et 30°C.

**6.** Procédé de préparation selon la revendication 1 ou 2, caractérisé en ce que les ions fluorure et les ions alcalins ou alcalino-terreux sont introduits :
- sous forme de fluorure alcalin ou alcalino-terreux dont le cation associé correspond à l'ion alcalin ou alcalino-terreux, seul ou en association avec HF, ou bien
- sous forme de mélange d'une base ou d'un nitrate dont le cation associé correspond à l'ion alcalin ou alcalino-terreux et d'HF, ou bien
- sous forme du mélange d'un carbonate ou d'un nitrate dont le cation associé correspond à l'ion alcalin ou alcalino-terreux et d'HF.

**7.** Procédé selon la revendication 1 ou 2, caractérisé en ce que les ions fluorure et ammonium sont introduits sous forme de fluorure d'ammonium.

## Claims

**1.** A process for the production of a double fluoride of uranium and of either ammonium or an alkali or alkali-earth metal, from uranyl nitrate, wherein uranyl nitrate is reduced to uranous nitrate in a nitric aqueous solution; and uranium is precipitated from the solution as a double fluoride by fluoride ions, in presence of alkali or alkali-earth ions,

characterized in that reduction is carried out by hydrogen as a continuous process by circulation on a catalyst bed in presence of ions $H+$ under a pressure higher than 30 bars and at a temperature lower than 50°C, with an excess of hydrogen with respect to the stoechiometrically required quantity, with a concentration of nitric acid comprised between 2N and 5N.

**2.** A process according to claim 1,

characterized in that the pressure during reduction is comprised between 40 and 50 bars.

**3.** A process according to claim 1 or 2,

characterized in that the duration of the reduction step is of about five minutes.

**4.** A process according to claim 1,

characterized in that the catalyst is a platinum, palladium or nickel base catalyst on a silica or alumina support.

**5.** A process according to claim 4,

characterized in that the reduction step is carried out at a temperature comprised between 20°C and 30°C.

**6.** A process of production according to claim 1 or 2,

characterized in that the fluoride ions and the alkali or alkali-earth ions are introduced:
- as alkali or alkali-earth fluoride whose associated cation corresponds to the alkali or alkali-earth ion, alone or in association with HF, or
- as a mixture of the base or a nitrate whose associated cation corresponds to the alkali or alkali-earth ion and of HF, or
- as a mixture of a carbonate or nitrate whose associated cation corresponds to the alkali or alkali-earth ion and of HF.

**7.** A process according to claim 1 or 2,

characterized in that the fluoride and ammonium ions are introduced as ammonium fluoride.

## Patentansprüche

**1.** Verfahren zur Herstellung von Ammonium-, Alkalimetall- oder Erdalkalimetall-Urandoppelfluorid ausgehend von Uranylnitrat, wobei Uranylnitrat in wäßriger salpetersaurer Lösung zu U(IV)-nitrat reduziert wird und das Uran aus der Lösung in Gegenwart von Alkali- oder Erdalkaliionen mit Fluoridionen in Form des Doppelfluorids ausgefällt wird,
dadurch gekennzeichnet, daß
die Reduktion mit Wasserstoff kontinuierlich durch Umwälzen auf einem Katalysatorbett in Gegenwart von $H^+$-Ionen unter einem Druck über 30 bar und bei einer Temperatur unter 50°C mit einem Überschuß an Wasserstoff in bezug auf die nötige stöchiometrische Menge bei einer Konzentration an Salpetersäure zwischen 2 mol/l und 5 mol/l durchgeführt wird.

**2.** Verfahren nach Anspruch 1, dadurch gekennzeichnet, daß der Druck während der Reduktion zwischen 40 und 50 bar liegt.

**3.** Verfahren nach Anspruch 1 oder 2, dadurch gekennzeichnet, daß die Zeitdauer der Reduktion in der Größenordnung von fünf Minuten liegt.

**4.** Verfahren nach Anspruch 1, dadurch gekennzeichnet, daß der Katalysator auf der Basis von Platin, Palladium oder Nickel auf einem Kieselsäure- oder Aluminiumoxid-Träger ist.

**5.** Verfahren nach Anspruch 4, dadurch gekennzeichnet, daß die Reduktion bei einer Temperatur zwischen 20 °C und 30 °C durchgeführt wird.

**6.** Verfahren zur Herstellung von Urandoppelfluorid nach Anspruch 1 oder 2, dadurch gekennzeichnet, daß die Fluoridionen und die Alkali- oder Erdalkaliionen eingeführt werden:

- in Form des Alkali- oder Erdalkalifluorids, wobei das Kation das Alkali- oder Erdalkaliion ist, einzeln oder zusammen mit HF oder
- in Form eines Gemisches einer Base oder eines Nitrats, deren Kation das Alkali- oder Erdalkaliion ist, und HF oder
- in Form eines Gemisches eines Carbonats oder eines Nitrats, deren Kation das Alkali- oder Erdalkaliion ist, und HF.

**7.** Verfahren nach Anspruch 1 oder 2, dadurch gekennzeichnet, daß die Fluorid- und Ammoniumionen in Form von Ammoniumfluorid eingeführt werden.

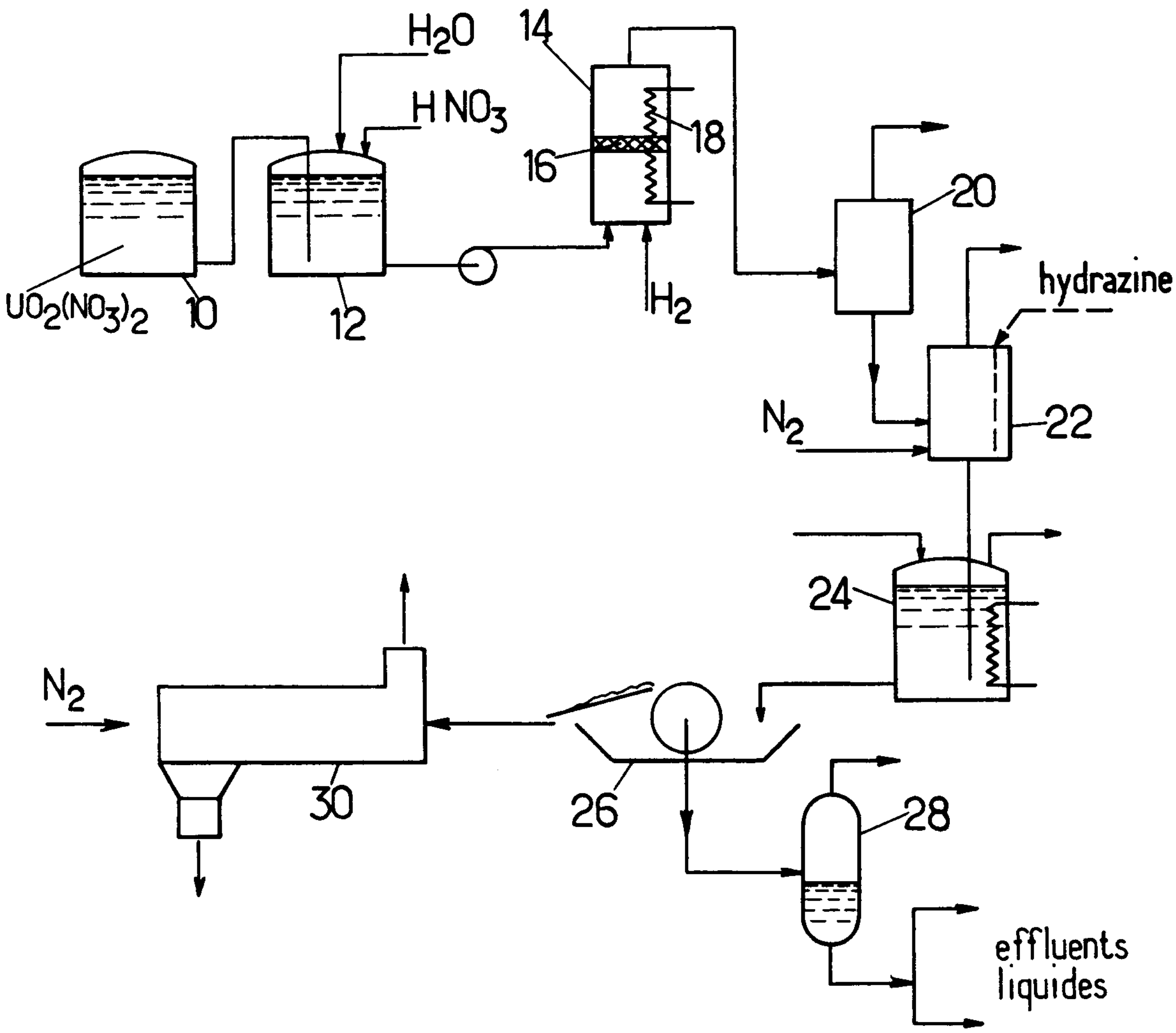

H2O
HNO3
14
18
16
20
hydrazine
UO2(NO3)2
10
12
H2
N2
22
24
N2
30
26
28
effluents
liquides